(19)

**Europäisches Patentamt**
**European Patent Office**
**Office européen des brevets**

(11)     **EP 4 009 245 A1**

(12)     **EUROPEAN PATENT APPLICATION**

(43) Date of publication:
**08.06.2022   Bulletin 2022/23**

(21) Application number: **21211637.0**

(22) Date of filing: **01.12.2021**

(51) International Patent Classification (IPC):
**G06N 3/08** $^{(2006.01)}$        **G06N 3/04** $^{(2006.01)}$

(52) Cooperative Patent Classification (CPC):
**G06N 3/084; G06N 3/0454**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **02.12.2020   US 202063120216 P**
                    **23.02.2021   US 202163152348 P**

(71) Applicant: **HTC Corporation
Taoyuan City 330, (TW)**

(72) Inventors:
• **PENG, Yu-Shao**
   **Taoyuan City 330 (TW)**
• **TANG, Kai-Fu**
   **Taoyuan City 330 (TW)**
• **CHANG, Edward Yjh-Uei**
   **Taoyuan City 330 (TW)**

(74) Representative: **Klang, Alexander H. et al
Wagner & Geyer Partnerschaft mbB
Patent- und Rechtsanwälte
Gewürzmühlstrasse 5
80538 München (DE)**

(54)     **MACHINE LEARNING METHOD AND MACHINE LEARNING DEVICE FOR ELIMINATING SPURIOUS CORRELATION**

(57)     A machine learning method includes steps of: obtaining, by a processor, a model parameter from a memory, and performing, by a processor, a classification model according to the model parameter, wherein the classification model comprises a plurality of neural network structural layers; calculating, by the processor, a first loss and a second loss according to a plurality of training samples, wherein the first loss corresponds to an output layer of the plurality of neural network structural layers, and the second loss corresponds to one, which is before the output layer, of the plurality of neural network structural layers; and performing, by the processor, a plurality of updating operations for the model parameter according to the first loss and the second loss to train the classification model.

EP 4 009 245 A1

**Description**

**CROSS - REFERENCE TO RELATED APPLICATION**

This application claims priority to US Provisional Application Serial Number 63/120,216, filed December 2, 2020, and US Provisional Application Serial Number 63/152,348, filed February 23, 2021, all of which are herein incorporated by reference in their entireties.

**BACKGROUND**

Field of Invention

The present invention relates to a machine learning technology. More particularly, the present invention relates to a machine learning technology for eliminating spurious correlation.

Description of Related Art

Technologies such as machine learning and neural networks are widely used in a technical field of artificial intelligence. One of the important applications of artificial intelligence is to identify objects (such as human faces, vehicle license plates, etc.) or predict data (such as stock prediction, medical treatment prediction, etc.). The object detection and the data prediction can be realized through feature extraction and feature classification.

However, spurious correlation usually happens between features for the feature extraction and the feature classification, and the spurious correlation always causes that prediction accuracy of the object detection and the data prediction decreases.

**SUMMARY**

The disclosure provides a machine learning method, which includes following steps: obtaining, by a processor, a model parameter from a memory, and performing, by a processor, a classification model according to the model parameter, wherein the classification model comprises a plurality of neural network structural layers; calculating, by the processor, a first loss and a second loss according to a plurality of training samples, wherein the first loss corresponds to an output layer of the plurality of neural network structural layers, and the second loss corresponds to one, which is before the output layer, of the plurality of neural network structural layers; and performing, by the processor, a plurality of updating operations for the model parameter according to the first loss and the second loss to train the classification model.

The disclosure provides a machine learning device, which includes a memory and a processor. The memory is configured for storing a plurality of instructions and a model parameter; a processor is coupled with the memory. The processor is configured to run a classification model, and is configured to execute the instructions to: obtain the model parameter from the memory, and perform a classification model according to the model parameter, wherein the classification model comprises a plurality of neural network structural layers; calculate a first loss corresponding to an output layer of the plurality of neural network structural layers, and calculating a second loss corresponding to one, which is before the output layer, of the plurality of neural network structural layers; and perform a plurality of updating operations for a model parameter of the classification model according to the first loss and the second loss to train the classification model.

These and other features, aspects, and advantages of the present invention will become better understood with reference to the following description and appended claims.

It is to be understood that both the foregoing general description and the following detailed description are by examples, and are intended to provide further explanation of the invention as claimed.

**BRIEF DESCRIPTION OF THE DRAWINGS**

The invention can be more fully understood by reading the following detailed description of the embodiment, with reference made to the accompanying drawings as follows:

FIG. 1 is a schematic diagram illustrating a machine learning device according to an embodiment of the disclosure.

FIG. 2 is a schematic diagram illustrating a machine learning method according to an embodiment of the disclosure.

FIG. 3 is a schematic diagram illustrating a classification model and losses according to an embodiment of the disclosure.

FIG. 4 is a flowchart illustrating further steps within one step shown in FIG. 2 in some embodiments.

FIG. 5 is a flowchart illustrating further steps within one step shown in FIG. 2 in other embodiments.

FIG. 6 is a flowchart illustrating further steps within another step shown in FIG. 2 in some embodiments.

FIG. 7 is a flowchart illustrating an additional step in FIG. 2 in some embodiments.

FIG. 8 is a flowchart illustrating further steps within another step shown in FIG. 2 in other embodiments.

## DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

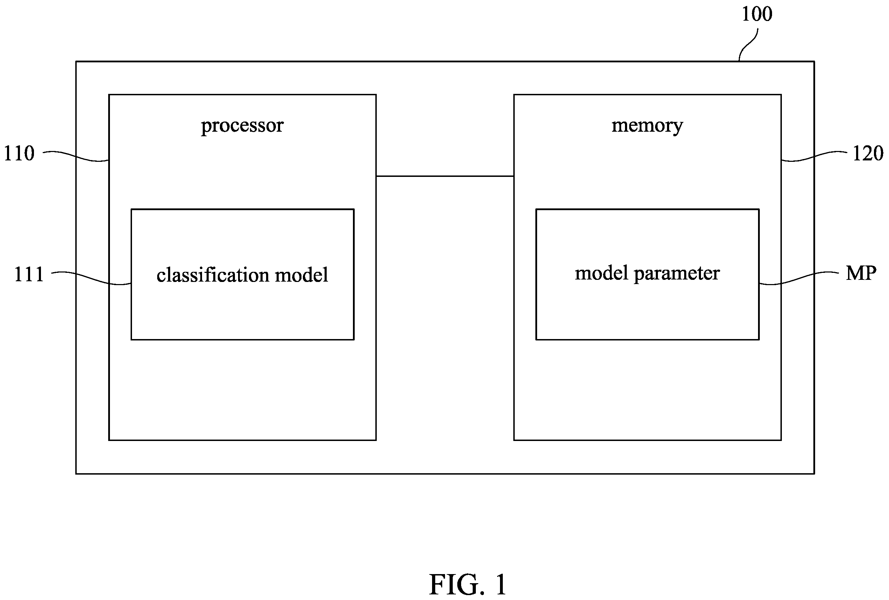

Reference is made to FIG. 1, which is a schematic diagram illustrating a machine learning device according to an embodiment of the disclosure. The machine learning device 100 includes a processor 110 and a memory 120. The processor 110 is coupled with the memory 120.

In some embodiments, the machine learning device 100 can be established by a computer, a server or a processing center. In some embodiments, the processor 110 can be realized by a central processing unit or a computing unit. In some embodiments, the memory 120 can be realized by a flash memory, a read-only memory (ROM), a hard disk or any equivalent storage component.

In some embodiments, the machine learning device 100 is not limited to include the processor 110 and the memory 120. The machine learning device 100 can further include other components required to operating the machine learning device 100 in various applications. For example, the machine learning device 100 can further include an output interface (e.g., a display panel for displaying information), an input interface (e.g., a touch panel, a keyboard, a microphone, a scanner or a flash memory reader) and a communication circuit (e.g., a WiFi communication module, a Bluetooth communication module, a wireless telecommunication module, etc.).

As shown in FIG. 1, the processor 110 is configured to run a classification model 111 based on corresponding software/firmware instructions stored in the memory 120.

In some embodiments, the classification model 111 can classify input data, for example, detecting that an input image contains vehicles, faces, license plates, text, totems, or other image-feature objects, or predicting input stock data being rising or falling in the future. The classification model 111 is configured to generate a corresponding label according to a classification result. It should be noted that the classification model 111 will refer to a model parameter MP while performing classification operations.

As shown in FIG. 1, the memory 120 is configured to store the model parameter MP. In some embodiments, the model parameter MP includes multiple weight parameter contents.

In this embodiment, the classification model 111 includes multiple neural network structural layers. In some embodiments, each one of the neural network structural layers corresponds to one weight parameter content (configured to determine the operation of one neural network structural layer) among the model parameter MP. On the other hand, each one of the neural network structural layers of the classification model 111 corresponds to the weight parameter content independent from others. In other words, each one of the neural network structural layers corresponds to one weight value set, where this weight value set includes multiple weight values.

In some embodiments, the neural network structural layer can be a convolution layer, a pooling layer, a linear rectification layer, a fully connected layer or other type of neural network structure layer. In some embodiments, the classification model 111 is relative to neural networks (e.g. the classification model 111 is composed of deep residual networks (ResNet) and fully connected layer, or composed of EfficentNet and fully connected layer).

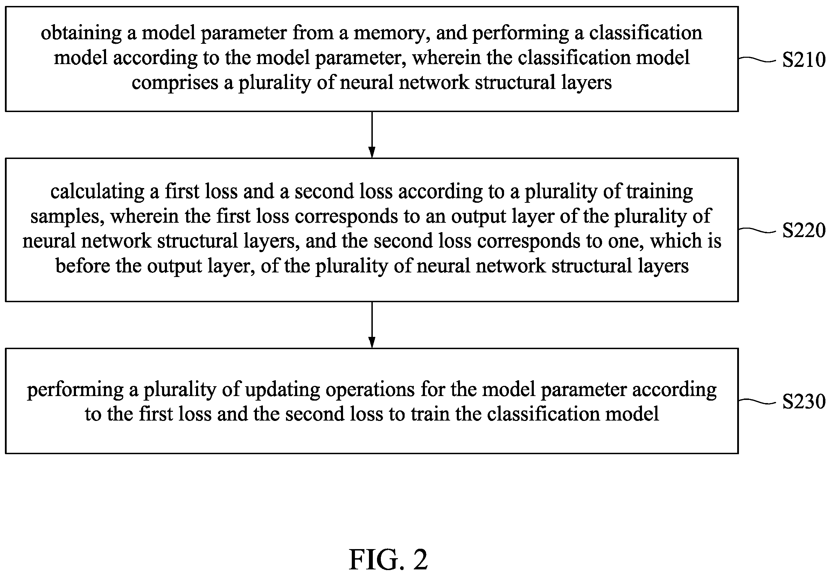

Reference is further made to FIG. 2, which is a schematic diagram illustrating a machine learning method according to an embodiment of the disclosure. The machine learning device 100 shown in FIG. 1 can be utilized to perform the machine learning method shown in FIG. 2.

As shown in FIG. 2, firstly in step S210, the model parameter MP is obtained from the memory 120 and the classification model 111 is performed according to the model parameter MP. In an embodiment, the model parameter MP in the memory 120 can be obtained according to average values from historical training practices, manual-setting default values, or random values.

In step S220, a first loss and a second loss are calculated according to multiple training samples, where the first loss corresponds to an output layer of the neural network structural layers, and the second loss corresponds to one, which is before the output layer, of the neural network structural layers. In an embodiment, the first loss is generated by the processor 110 from the output layer of the neural network structural layers of the classification model 111, and the second loss is generated by the processor 110 from the neural network structural layer before the output layer. In some embodiments, the output layer includes at least one fully connection layer. Further details about step S220 will be further described in following paragraphs with some examples.

In step S230, multiple updating operations are performed for the model parameter MP according to the first loss and the second loss to train the classification model 111. In an embodiment, the model parameter MP is updated by the processor 110 in the updating operations according to the first loss and the second loss to generate the updated model parameter MP, and the classification model is trained according to the updated model parameter MP to generate the classification model 111 after the training. Further details about step S230 will be further described in following paragraphs with some examples.

By this way, the classification model 111 after training can be used to execute subsequent applications. For example, the classification model 111 after the training can be used for object recognition, face recognition, audio recognition, or motion detection within input pictures, images or streaming data, or can be used for data prediction about stock data or weather information.

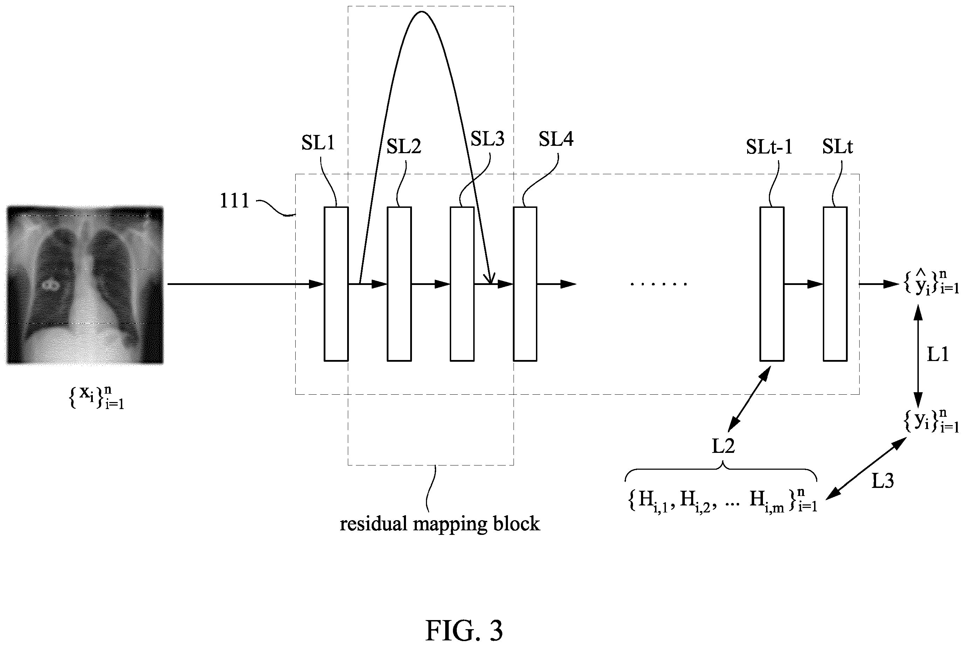

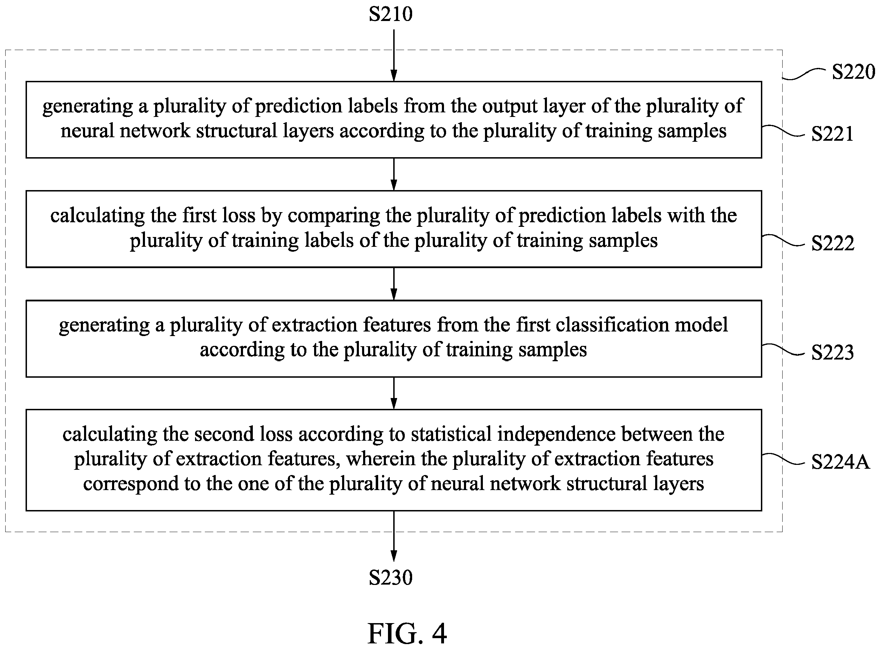

Reference is further made to FIG. 3 and FIG. 4. FIG. 3 is a schematic diagram illustrating the classification model and losses according to an embodiment of the disclosure. FIG. 4 is a flowchart illustrating further steps S221 to S225 within step S220 in some embodiments.

As shown in FIG. 3, the classification model 111 includes the neural network structural layers SL1, SL2, ...SLt. In some embodiments, t is a positive integer. In general, the total quantity of layers in the classification model 111 can be determined according to application requirements (e.g., classification accuracy requirement, complexity of classification target, and diversity of input images). In some cases, a common range of t can be ranged between 16 and 128, and the disclosure is not limited to a specific quantity of layers.

For example, the neural network structure layers SL1 and SL2 can be convolutional layers; the neural network structure layer SL3 can be a pooling layer; the neural network structure layers SL4 and SL5 can be convolutional layers; the neural network structure layer SL6 can be a pooling layer, the neural network structure layer SL7 can be a convolutional layer; the neural network structure layer SL8 can be a linear rectification layer; and the neural network structure layer SLt can be a fully connected layer, and the disclosure is not limited thereto.

In some embodiments, the classification model 111 can have multiple residual mapping blocks, and by using structures of the residual mapping blocks, t can be decreased greatly. The following refers to this structure of the classification model 111 as examples to further describe step S221 to step S224A.

It is added that, for brevity of description, the classification model 111 in FIG. 3 is illustrated as a model with the residual mapping blocks (e.g. ResNet model) for demonstration. The disclosure is not limited thereto. In practical applications, the classification model 111 may be other type of the convolutional neural networks. In some embodiments, the classification model 111 is an EfficentNet model.

As shown in FIG. 3 and FIG. 4, in step S221, multiple prediction labels $\left\{\hat{y}_i\right\}_{i=1}^n$ are generated by the processor 110 from the output layer SLt of the neural network structural layers SL1, SL2, ...SLt according to the training samples $\left\{X_i\right\}_{i=1}^n$. It should be noted that n is a quantity of the training samples $\left\{X_i\right\}_{i=1}^n$, n also is a quantity of prediction labels $\left\{\hat{y}_i\right\}_{i=1}^n$, n can be a positive integer, and i can be a positive integer which is not more than the quantity n. As shown in FIG. 3, when the training sample $X_i$ is input to the classification model 111, the prediction label $\hat{y}_i$ is generated from the neural network structural layer SLt (i.e. the output layer) of the classification model 111 through operations of the neural network structural layers SL1, SL2, ...SLt. By analogy, the training samples $\left\{X_i\right\}_{i=1}^n$ can be input to the classification model 111 to generate the prediction labels $\left\{\hat{y}_i\right\}_{i=1}^n$.

As shown in FIG. 3 and FIG. 4, in step S222, the processor 110 executes a comparison algorithm for comparing the prediction labels $\left\{\hat{y}_i\right\}_{i=1}^n$ with multiple training labels $\left\{y_i\right\}_{i=1}^n$ of the training samples $\left\{X_i\right\}_{i=1}^n$ to generate the first loss L1. As shown in FIG. 3, the prediction label $\hat{y}_i$ is compared with the training label $y_i$ of the training sample $X_i$ to calculate a loss. By analogy, multiple losses are calculated by the processor 110 with comparison algorithms by comparing the prediction labels with training labels, and the first loss L1 is generated by the processor 110 according to these losses (i.e. traditional loss function). In some embodiments, the processor 110 performs a cross-entropy calculation on the predicted labels $\left\{\hat{y}_i\right\}_{i=1}^{n}$ and the training labels

$$\left\{y_i\right\}_{i=1}^{n}$$

to obtain the first loss L1.

As shown in FIG. 3 and FIG. 4, in step S223, multiple extraction features are generated by the processor 110 from the classification model 111 according to the training samples. As shown in FIG. 3, after the training sample Xi is input to the classification model 111, the extraction features $H_{i,1}$, $H_{i,2}$,...$H_{i,m}$ are calculated by artificial neurons of the neural network structural layer Lt-1 of the classification model 111 through the operations of the neural network structural layers SL1, SL2, ...SLt-1, where m can be a positive integer which is equal to a quantity of the artificial neurons, and the extraction features $H_{i,1}$, $H_{i,2}$,...$H_{i,m}$ corresponds to the artificial neurons of the neural network structural layer Lt-1 respectively. By analogy, the extraction features

$$\left\{H_{i,1},\ H_{i,2},...H_{i,m}\right\}_{i=1}^{n}$$

corresponding to the training samples

$$\left\{X_i\right\}_{i=1}^{n}$$

are calculated from the artificial neurons.

It should be noted that it may exists spurious correlation between the extraction features

$$\left\{H_{i,1},\ H_{i,2},...H_{i,m}\right\}_{i=1}^{n}$$

and the training labels

$$\left\{y_i\right\}_{i=1}^{n}$$

. In detail, suppose a first extraction feature is causally related to both a second extraction feature and the training label $y_i$, but the second extraction feature and the training label $y_i$ are not causally related to each other. Based on this, the second extraction feature and the training label $y_i$ may be associated. When the value of the second extraction feature increases along with the change of labels linearly, the second extraction feature is spuriously correlated with the training label $y_i$. The spurious correlation belongs to explicit if the extraction feature which causes the spurious correlation can be observed (i.e. relationship between the first extraction feature, the second extraction feature and the training label yi). Otherwise, the spurious correlation is said to be implicit (i.e. relationship between the second extraction feature and the training label yi). The spurious correlation causes that the predicted labels

$$\left\{\hat{y}_i\right\}_{i=1}^{n}$$

are different from the training labels

$$\left\{y_i\right\}_{i=1}^{n}$$

more greatly.

For example, if a patient clinical image usually has a cell tissue of a lesion and a bone which color is similar the cell tissue, it causes the explicit spurious correlation between the extraction feature of the bone and the label of the lesion. For another example, the patient clinical image usually has a background, and the lesion in the patient clinical image is similar to the background. Therefore, it causes the implicit spurious correlation between the extraction feature of the background and the label of the lesion.

To avoid the spurious correlation, the following paragraphs further describes details of using statistical independence to eliminate the explicit spurious correlation and using average treatment effect to eliminate the implicit spurious correlation.

As shown in FIG. 3 and FIG. 4, in step S224A, the second loss L2 is calculated by the processor 110 according to statistical independence between the extraction features, where the extraction features

$$\left\{H_{i,1},\ H_{i,2},\dots H_{i,m}\right\}_{i=1}^{n}$$

correspond to the one (i.e. the neural network structural layer SLt-1) of the neural network structural layers SL1, SL2, ...SLt. In detail, statistical independence of random variables is shown in following formula (1).

$$E(a^p b^q)=E(a^p)E(b^q)\dots(1)$$

Where E(.) means an expected value of the random variables, a and b are the random variables, and p and q are positive integers. According to the formula (1), an independent loss can be shown in following formula (2).

$$\text{independent loss}=-\left|E(a^p b^q)-E(a^p)E(b^q)\right|\dots(2)$$

As shown in FIG. 3, by replacing the random variables as the extraction features

$$\left\{H_{i,1},\ H_{i,2},\dots H_{i,m}\right\}_{i=1}^{n}$$

, the formula (2) can be rewritten as following formula (3) which indicates the second loss L2 (i.e. an independent loss between the extraction features

$$\left\{H_{i,1},\ H_{i,2},\dots H_{i,m}\right\}_{i=1}^{n}).$$

.

$$\text{second loss} = -\sum_{\substack{j=1 \\ j \neq k}}^{m}\sum_{k=j}^{m}\left|\left(\frac{1}{n}\sum_{i=1}^{n}H_{i,j}^p H_{i,k}^q\right)-\left(\frac{1}{n}\sum_{i=1}^{n}H_{i,j}^p\right)\left(\frac{1}{n}\sum_{i=1}^{n}H_{i,k}^q\right)\right| \quad\dots(3)$$

Where j and k are positive integers and are not more than m. By using the formula (3), the second loss L2 is calculated according to the extraction features

6

$$\left\{H_{i,1},\ H_{i.2},...H_{i.m}\right\}_{i=1}^{n}$$

. In some embodiments, the second loss of the formula (3) can further multiply an importance value to generate the second loss L2, where the importance value is more than zero and is a hyperparameter to control importance of the independent loss.

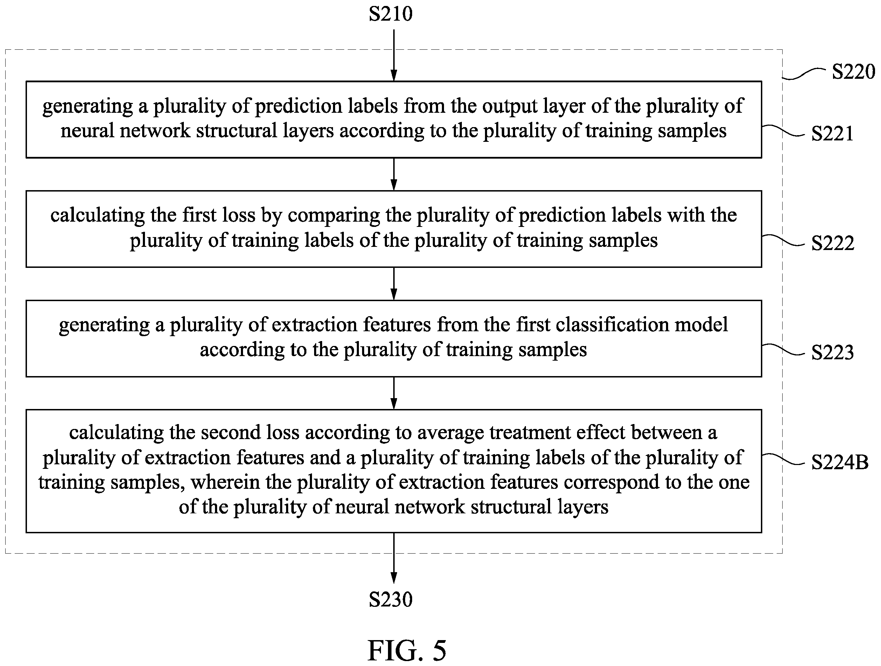

Reference is further made to FIG. 5. FIG. 5 is a flowchart illustrating detailed steps S221 to S224B within step S220 in other embodiments.

It should be noted that difference between FIG. 4 and FIG. 5 is only in step S224B. In other words, in addition to performing step S224A to generate the second loss, alternatively, step S224B can also be performed to generate the second loss. Therefore, the following description is only for step S224B, and the rest of the steps will not be repeated here.

As shown in FIG. 3 and FIG. 5, in step S224B, the second loss L3 is calculated by the processor 110 according to according to average treatment effect (ATE) between the extraction features $\left\{H_{i,1},\ H_{i.2},...H_{i.m}\right\}_{i=1}^{n}$ and the training labels $\left\{y_i\right\}_{i=1}^{n}$ of the training samples $\left\{X_i\right\}_{i=1}^{n}$, where the extraction features $\left\{H_{i,1},\ H_{i.2},...H_{i.m}\right\}_{i=1}^{n}$ correspond to the one (i.e. the neural network structural layer SLt-1) of the neural network structural layers SL1, SL2, ...SLt. In detail, average treatment effect (i.e. causality) of random variables is shown in following formula (4).

$$average\ treatment\ effect = E\left[\frac{Y_i * T_i}{p(T = 1|C_i)}\right] - E\left[\frac{Y_i * (1 - T_i)}{1 - p(T = 1|C_i)}\right]$$

$$= \frac{1}{n}\sum_{i=1}^{n}\frac{Y_iT_i}{p(T_i=1)} - \frac{1}{n}\sum_{i=1}^{n}\frac{Y_i(1-T_i)}{1-p(T_i=1)}$$

$$\approx \frac{1}{|\mathcal{T}|}\sum_{i=1}^{n}Y_iT_i - \frac{1}{|\mathcal{C}|}\sum_{i=1}^{n}Y_i(1-T_i)\ \ \ \ .....(4)$$

Where p(.) means a probability of a random variable, $Y_i$ and $T_i$ are random variables, $T_i \in \{0,1\}$ represent a treatment, $Y_i \in \mathbb{R}$ is an observed outcome, $C_i \in \mathbb{R}^v$ is a covariate vector, $|\mathcal{T}| = \sum_{i=1}^{n}T_i$, and $|\mathcal{C}| = \sum_{i=1}^{n}(1-T_i)$.

As shown in FIG. 3, , by replacing $Y_i$ and $T_i$ as the training labels $\left\{y_i\right\}_{i=1}^{n}$ and the extraction features $\left\{H_{i,1},\ H_{i.2},...H_{i.m}\right\}_{i=1}^{n}$, the formula (4) can be rewritten as following formula (5).

$$loss\ of\ jth\ extraction\ featur \approx \left|\frac{1}{n}\sum_{i=1}^{n}y_i\sigma(H_{i,j}) - \frac{1}{n}\sum_{i=1}^{n}y_i(1-\sigma(H_{i,j}))\right|\ \ \ .....(5)$$

Where the loss of jth extraction feature means a causal loss (i.e. the average treatment effect loss) corresponding to the extraction features $H_{1,j}$, $H_{2,j}$, ...$H_{n,j}$, $\sigma(x)$ means a hard sigmoid function which is max(0, min(1, $\frac{x+1}{2}$ )). Based on the formula (5), the second loss L3 which indicates the average treatment effect of the $\left\{H_{i,1},\ H_{i,2},...H_{i,m}\right\}_{i=1}^{n}$ is shown as following formula (6).

$$second\ loss = \frac{1}{m}\sum_{j=1}^{m}\left|\frac{1}{n}\sum_{i=1}^{n}y_i\sigma(H_{i,j}) - \frac{1}{n}\sum_{i=1}^{n}y_i(1-\sigma(H_{i,j}))\right| \quad .....(6)$$

By using the formula (6), the second loss L3 is calculated according to the extraction features

$$\left\{H_{i,1},\ H_{i,2},...H_{i,m}\right\}_{i=1}^{n}$$

and the training labels

$$\left\{y_i\right\}_{i=1}^{n}$$

of the training samples

$$\left\{X_i\right\}_{i=1}^{n}$$

. In some embodiments, the second loss of the formula (6) also can further multiply another importance value to generate the second loss L3, where the another importance value is also more than zero and is another hyperparameter to control importance of the average treatment effect loss.

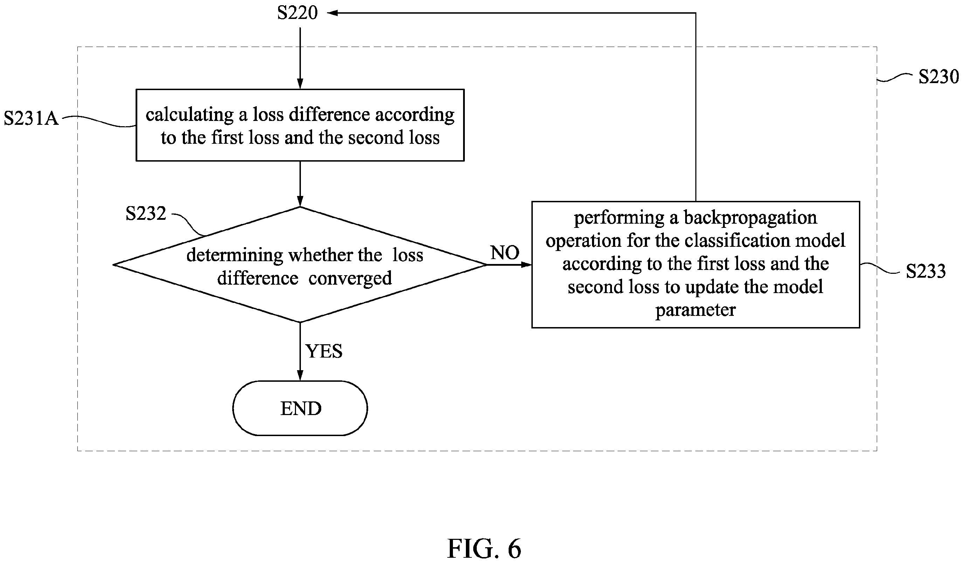

Reference is further made to FIG. 6. FIG. 6 is a flowchart illustrating detailed steps S231A to S233 within step S230 in some embodiments.

As shown in FIG. 6, in step S231A, a loss difference is calculated by the processor 110 according to the first loss and the second loss. In detail, the processor 110 performs difference operation between the first loss and the second loss to generate the loss difference (i.e. the first loss subtracts the second loss). It should be noted that the second loss can be generated from step S224A in FIG. 4 or step S224B in FIG. 5. In other words, the loss difference can be calculated according to the first loss and the independent loss or according to the first loss and the average treatment effect loss.

In addition, the loss difference also can be calculated according to the first loss, the second loss generated from step S224A in FIG. 4 and the second loss generated from step S224B in FIG. 5 at the same time (further details will be further described in following paragraphs with some examples).

In step S232, it is to determine whether the loss difference converged. In some embodiments, when the loss difference converged, the loss difference approaches or equals to a difference threshold which is generated according to statistical experiment outcomes.

In this embodiments, if the loss difference did not converge, it performs step S233. In step S233, a backpropagation operation is performed by the processor 110 for the classification model according to the first loss and the second loss to update the model parameter MP. In other words, an updated model parameter is generated from the model parameter MP according to backpropagation based on the first loss and the second loss.

By this way, it continues to repeat steps s233, S220 and S231A for gradually updating the model parameter MP in an iterative manner. Accordingly, the loss difference minimizes gradually (i.e. the second loss maximizes gradually) until the loss difference approaches or equals to the difference threshold. On the contrary, if the loss difference converged, it means that the machine learning device 100 has completed the training, and the classification model 111 after training can be used to execute subsequent applications.

Based on aforesaid embodiments, by using the second loss in step S224A, the extraction features belonging to the explicit spurious correlation can be removed in step S230. In addition, by using the second loss in step S224B, the extraction features belonging to the implicit spurious correlation can be removed in step S230.

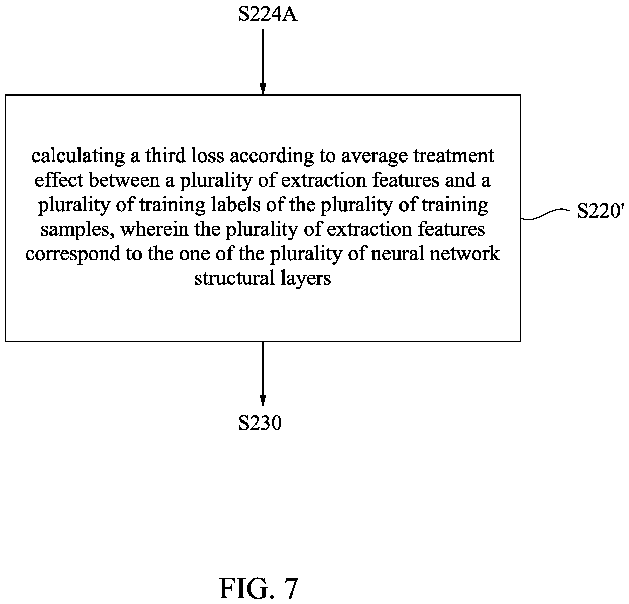

Reference is further made to FIG. 7. FIG. 7 is a flowchart illustrating an additional step after step 224A in some embodiments.

As shown in FIG. 7, step S220'A calculates a third loss in same way which calculates the second loss in step S224B. In other words, it means that the processor 110 generates the independent loss and the average treatment effect loss after generating the first loss. Because step S220'A is similar to step S224B, this step does not repeat here.

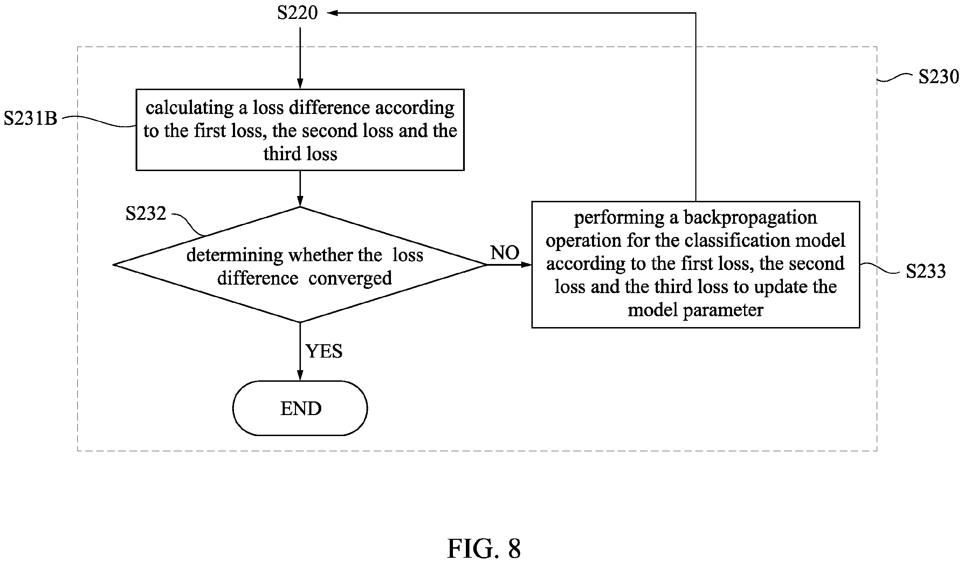

Reference is further made to FIG. 8. FIG. 8 is a flowchart illustrating a detailed steps S231B to S233 within step S230 in other embodiments.

It should be noted that difference between FIG. 6 and FIG. 8 is only in step S231B. In other words, in addition to performing step S231A to generate the loss difference, alternatively, step S231B can also be performed to generate the loss difference. Therefore, the following description is only for step S231B, and the rest of the steps will not be repeated here.

As shown as FIG. 8, after step S220' is performed, step S231B is then performed. In step S231B, a loss difference is calculated by the processor 110 according to the first loss, the second loss and the third loss. In detail, the processor 110 performs difference operation between the first loss and the second loss to generate the first difference, and then performs another difference operation between the first difference and the third loss to generate the loss difference (i.e. the first loss subtracts the second loss, and then subtracts the third loss). Therefore, an updated model parameter is generated from the model parameter MP according to backpropagation based on the first loss, the second loss and the third loss in step S233. By this way, it also continues to repeat steps s233, S220 and S231B for gradually updating the model parameter MP in an iterative manner. Accordingly, similarly, the loss difference also minimizes gradually (i.e. the second loss and the third loss maximizes gradually) until the loss difference approaches or equals to the difference threshold.

Based on aforesaid embodiments, by using the second loss in step S224A and the third loss in S220' at the same time, the extraction features belonging to the explicit spurious correlation and the implicit spurious correlation can be removed in step S230.

As shown in FIG. 1, during the training process of the machine learning device 100, the model parameter MP of the classification model 111 is updated according to the first loss and the second loss to avoid the explicit spurious correlation or the implicit spurious correlation between the extraction features and the training labels, where the second loss can be the independent loss or the average treatment effect loss. In addition, by using the independent loss and the average treatment effect loss to adjust the model parameter MP, the explicit spurious correlation and the implicit spurious correlation can be removed, thereby increasing accuracy of prediction of the classification model 111 greatly.

In the field of computer vision and computer prediction, the accuracy of deep learning mainly relies on a large quantity of labeled training data. As the quality, quantity, and variety of training data increase, the performance of the classification model usually improves correspondingly. However, the classification model always has the explicit spurious correlation or the implicit spurious correlation between the extraction features and the training labels. If we can remove the explicit spurious correlation or the implicit spurious correlation, it will be more efficient and more accurate. In aforesaid embodiments of the disclosure, it proposes adjust the model according to the independent loss and the average treatment effect loss to remove the explicit spurious correlation or the implicit spurious correlation in the classification model. Therefore, the adjusting of the model parameter according to the independent loss and the average treatment effect loss can improve the overall model performance.

For practical applications, the machine learning method and the machine learning device in the disclosure can be utilized in various fields such as machine vision, image classification, data prediction or data classification. For example, this machine learning method can be used in classifying medical images. The machine learning method can be used to classify X-ray images in normal conditions, with pneumonia, with bronchitis, or with heart disease. The machine learning method can also be used to classify ultrasound images with normal fetuses or abnormal fetal positions. The machine learning method can also be used to predict stock data being rising or falling in the future. On the other hand, this machine learning method can also be used to classify images collected in automatic driving, such as distinguishing normal roads, roads with obstacles, and road conditions images of other vehicles. The machine learning method can be utilized in other similar fields. For example, the machine learning methods and machine learning device in the disclosure can also be used in music spectrum recognition, spectral recognition, big data analysis, data feature recognition and other related machine learning fields.

Although the present invention has been described in considerable detail with reference to certain embodiments thereof, other embodiments are possible. Therefore, the spirit and scope of the appended claims should not be limited to the description of the embodiments contained herein.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

**Claims**

1. A machine learning method, comprising:

   obtaining, by a processor, a model parameter from a memory, and performing, by the processor, a classification model according to the model parameter, wherein the classification model comprises a plurality of neural network structural layers;
   calculating, by the processor, a first loss and a second loss according to a plurality of training samples, wherein the first loss corresponds to an output layer of the plurality of neural network structural layers, and the second loss corresponds to one, which is before the output layer, of the plurality of neural network structural layers; and
   performing, by the processor, a plurality of updating operations for the model parameter according to the first loss and the second loss to train the classification model.

2. The machine learning method of claim 1, wherein the step of calculating the first loss and the second loss according to the plurality of training samples comprises:

   generating, by the processor, a plurality of prediction labels from the output layer of the plurality of neural network structural layers according to the plurality of training samples; and
   calculating, by the processor, the first loss by comparing the plurality of prediction labels with a plurality of training labels of the plurality of training samples.

3. The machine learning method of claim 1, wherein the step of calculating the first loss and the second loss according to the plurality of training samples comprises:

   generating, by the processor, a plurality of extraction features from the classification model according to the plurality of training samples; and
   calculating, by the processor, the second loss according to statistical independence between the plurality of extraction features, wherein the plurality of extraction features correspond to the one of the plurality of neural network structural layers.

4. The machine learning method of claim 3, wherein the step of performing the plurality of updating operations for the model parameter according to the first loss and the second loss to train the classification model comprises:

   calculating, by the processor, a plurality of loss differences according to the first loss and the second loss; and
   performing, by the processor, a plurality of backpropagation operations for the classification model according to the plurality of loss differences to update the model parameter.

5. The machine learning method of claim 3, further comprising:
   calculating, by the processor, a third loss according to average treatment effect between the plurality of extraction features and a plurality of training labels of the plurality of training samples, wherein the plurality of extraction features correspond to the one of the plurality of neural network structural layers.

6. The machine learning method of claim 5, wherein the step of performing the plurality of updating operations for the model parameter according to the first loss and the second loss to train the classification model comprises:

   calculating, by the processor, a plurality of loss differences according to the first loss, the second loss and the third loss; and
   performing, by the processor, a plurality of backpropagation operations for the classification model according to the plurality of loss differences to update the model parameter.

7. The machine learning method of claim 1, wherein the step of calculating the first loss and the second loss according to the plurality of training samples comprises:

   generating, by the processor, a plurality of extraction features from the classification model according to the plurality of training samples; and
   calculating, by the processor, the second loss according to average treatment effect between a plurality of extraction features and a plurality of training labels of the plurality of training samples, wherein the plurality of extraction features correspond to the one of the plurality of neural network structural layers.

8. The machine learning method of claim 7, wherein the step of performing the plurality of updating operations for the model parameter according to the first loss and the second loss to train the classification model comprises:

calculating, by the processor, a plurality of loss differences according to the first loss and the second loss; and
performing, by the processor, a plurality of backpropagation operations for the classification model according to the plurality of loss differences to update the model parameter.

9. The machine learning method of claim 1, wherein the output layer comprises at least one fully connection layer, and the one of the plurality of neural network structural layers comprise at least one convolutional layer.

10. The machine learning method of claim 1, wherein the classification model is relative to neural networks.

11. A machine learning device, comprising:

a memory, configured for storing a plurality of instructions and a model parameter;
a processor, coupled with the memory, wherein the processor is configured to run a classification model, and is configured to execute the instructions to:

obtain the model parameter from the memory, and perform the classification model according to the model parameter, wherein the classification model comprises a plurality of neural network structural layers;
calculate a first loss corresponding to an output layer of the plurality of neural network structural layers according to a plurality of training samples, and calculate a second loss corresponding to one, which is before the output layer, of the plurality of neural network structural layers according to the plurality of training samples; and
perform a plurality of updating operations for the model parameter of the classification model according to the first loss and the second loss to train the classification model.

12. The machine learning device of claim 11, wherein the processor is further configured to:

generate a plurality of prediction labels from the output layer of the plurality of neural network structural layers; and
calculate the first loss by comparing the plurality of prediction labels with a plurality of training labels of the plurality of training samples.

13. The machine learning device of claim 11, wherein the processor is further configured to:

generate a plurality of extraction features from the classification model according to the plurality of training samples; and
calculate the second loss according to statistical independence between a plurality of extraction features, wherein the plurality of extraction features correspond to the one of the plurality of neural network structural layers.

14. The machine learning device of claim 13, wherein the processor is further configured to:

calculate a plurality of loss differences according to the first loss and the second loss; and
perform a plurality of backpropagation operations for the classification model according to the plurality of loss differences to update the model parameter.

15. The machine learning device of claim 13, wherein the processor is further configured to:
calculate a third loss according to average treatment effect between the plurality of extraction features and a plurality of training labels of the plurality of training samples, wherein the plurality of extraction features correspond to the one of the plurality of neural network structural layers.

16. The machine learning device of claim 15, wherein the processor is further configured to:

calculate a plurality of loss differences according to the first loss, the second loss and the third loss; and
perform a plurality of backpropagation operations for the classification model according to the plurality of loss differences to update the model parameter.

17. The machine learning device of claim 11, wherein the processor is further configured to:

generate a plurality of extraction features from the classification model according to the plurality of training samples; and

calculate the second loss according to average treatment effect between the plurality of extraction features and a plurality of training labels of the plurality of training samples, wherein the plurality of extraction features correspond to the one of the plurality of neural network structural layers.

18. The machine learning device of claim 17, wherein the processor is further configured to:

calculate a plurality of loss differences according to the first loss and the second loss; and
perform a plurality of backpropagation operations for the classification model according to the plurality of loss differences to update the model parameter.

19. The machine learning device of claim 11, wherein the output layer comprises at least one fully connection layer, and the one of the plurality of neural network structural layers comprise at least one convolutional layer.

20. The machine learning device of claim 11, wherein the classification model is relative to neural networks.

EP 4 009 245 A1

FIG. 1

EP 4 009 245 A1

obtaining a model parameter from a memory, and performing a classification model according to the model parameter, wherein the classification model comprises a plurality of neural network structural layers ⌐∽ S210

calculating a first loss and a second loss according to a plurality of training samples, wherein the first loss corresponds to an output layer of the plurality of neural network structural layers, and the second loss corresponds to one, which is before the output layer, of the plurality of neural network structural layers ⌐∽ S220

performing a plurality of updating operations for the model parameter according to the first loss and the second loss to train the classification model ⌐∽ S230

FIG. 2

**FIG. 3**

S220

S210 →

S221

generating a plurality of prediction labels from the output layer of the plurality of neural network structural layers according to the plurality of training samples

S222

calculating the first loss by comparing the plurality of prediction labels with the plurality of training labels of the plurality of training samples

S223

generating a plurality of extraction features from the first classification model according to the plurality of training samples

S224A

calculating the second loss according to statistical independence between the plurality of extraction features, wherein the plurality of extraction features correspond to the one of the plurality of neural network structural layers

→ S230

FIG. 4

S210

generating a plurality of prediction labels from the output layer of the plurality of neural network structural layers according to the plurality of training samples

calculating the first loss by comparing the plurality of prediction labels with the plurality of training labels of the plurality of training samples

generating a plurality of extraction features from the first classification model according to the plurality of training samples

calculating the second loss according to average treatment effect between a plurality of extraction features and a plurality of training labels of the plurality of training samples, wherein the plurality of extraction features correspond to the one of the plurality of neural network structural layers

S220

S221

S222

S223

S224B

S230

FIG. 5

EP 4 009 245 A1

S220

S231A — calculating a loss difference according
to the first loss and the second loss

S230

S232 — determining whether the loss
difference converged

NO

performing a backpropagation
operation for the classification model
according to the first loss and the
second loss to update the model
parameter

S233

YES

END

EP 4 009 245 A1

FIG. 6

S224A

calculating a third loss according to average treatment
effect between a plurality of extraction features and a
plurality of training labels of the plurality of training
samples, wherein the plurality of extraction features
correspond to the one of the plurality of neural network
structural layers

S220'

S230

FIG. 7

S220

EP 4 009 245 A1

S231B — calculating a loss difference according to the first loss, the second loss and the third loss

S230

S232 — determining whether the loss difference converged

NO → performing a backpropagation operation for the classification model according to the first loss, the second loss and the third loss to update the model parameter

S233

YES

END

FIG. 8

## EUROPEAN SEARCH REPORT

**Application Number**

EP 21 21 1637

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Nøkland Arild ET AL: "Training Neural Networks with Local Error Signals", , 7 May 2019 (2019-05-07), XP055912553, Retrieved from the Internet: URL:https://arxiv.org/pdf/1901.06656.pdf [retrieved on 2022-04-13] * page 1 – page 8 * * Appendices A and B * ----- | 1-20 | INV. G06N3/08 ADD. G06N3/04 |
| A | CLAUDIA SHI ET AL: "Adapting Neural Networks for the Estimation of Treatment Effects", ARXIV.ORG, CORNELL UNIVERSITY LIBRARY, 201 OLIN LIBRARY CORNELL UNIVERSITY ITHACA, NY 14853, 5 June 2019 (2019-06-05), XP081500230, * the whole document * ----- | 1-20 | |
| A | US 2020/074280 A1 (MEIER PETER [US] ET AL) 5 March 2020 (2020-03-05) * the whole document * ----- | 1-20 | TECHNICAL FIELDS SEARCHED (IPC) G06N |
| A | Shalit Uri ET AL: "Estimating individual treatment effect: generalization bounds and algorithms", , 16 May 2017 (2017-05-16), XP055912532, Retrieved from the Internet: URL:https://arxiv.org/pdf/1606.03976.pdf [retrieved on 2022-04-13] * the whole document * ----- | 1-20 | |

The present search report has been drawn up for all claims

| Place of search | Date of completion of the search | Examiner |
|---|---|---|
| The Hague | 14 April 2022 | Volkmer, Markus |

## ANNEX TO THE EUROPEAN SEARCH REPORT
## ON EUROPEAN PATENT APPLICATION NO.

EP 21 21 1637

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2022

| Patent document cited in search report | Publication date | Patent family member(s) | Publication date |
|---|---|---|---|
| US 2020074280 A1 | 05-03-2020 | NONE | |

For more details about this annex : see Official Journal of the European Patent Office, No. 12/82

**EP 4 009 245 A1**

## REFERENCES CITED IN THE DESCRIPTION

**Patent documents cited in the description**

- US 63120216
- US 63152348